(19)

**Europäisches Patentamt**
**European Patent Office**
**Office européen des brevets**

(11)     **EP 2 893 622 B1**

(12)                     **FASCICULE DE BREVET EUROPEEN**

(45) Date de publication et mention
de la délivrance du brevet:
**16.01.2019 Bulletin 2019/03**

(51) Int Cl.:
***H02K 49/04*** *(2006.01)*

(21) Numéro de dépôt: **13766616.0**

(86) Numéro de dépôt international:
**PCT/FR2013/052030**

(22) Date de dépôt: **03.09.2013**

(87) Numéro de publication internationale:
**WO 2014/033420 (06.03.2014 Gazette 2014/10)**

(54) **ROTOR DE RALENTISSEUR ÉLECTROMAGNÉTIQUE POUR VÉHICULE, RALENTISSEUR COMPRENANT UN TEL ROTOR ET VÉHICULE MUNI D'UN TEL RALENTISSEUR**

ELEKTROMAGNETISCHER RETARDERROTOR FÜR EIN FAHRZEUG, RETARDER MIT EINEM SOLCHEN ROTOR UND FAHRZEUG MIT SOLCH EINEM RETARDER

ELECTROMAGNETIC RETARDER ROTOR FOR A VEHICLE, RETARDER COMPRISING SUCH A ROTOR, AND VEHICLE PROVIDED WITH SUCH A RETARDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(72) Inventeurs:
• **LOUNIS, Rafik**
**F-95300 Pontoise (FR)**
• **QUENNET, Nicolas**
**F-95240 Cormeilles en Parisis (FR)**

(30) Priorité: **03.09.2012 FR 1258182**

(74) Mandataire: **Cabinet Plasseraud**
**66, rue de la Chaussée d'Antin**
**75440 Paris Cedex 09 (FR)**

(43) Date de publication de la demande:
**15.07.2015 Bulletin 2015/29**

(73) Titulaire: **Telma**
**95310 Saint-Ouen L'Aumône (FR)**

(56) Documents cités:
**EP-A2- 0 537 723      AT-A2- 508 877**
**FR-A- 1 138 752      FR-A1- 2 863 787**
**FR-A5- 2 044 114**

**Description**

L'invention a trait au domaine des ralentisseurs électromagnétiques, et plus particulièrement aux rotors de tels ralentisseurs.

Les ralentisseurs électromagnétiques sont des dispositifs permettant de compléter les systèmes de freinage des véhicules de toute catégorie, et notamment des véhicules terrestres à moteur tels que des trains, des poids lourds ou encore des utilitaires, pour lesquels ils sont particulièrement avantageux.

En effet, lors du freinage dit de service de véhicules de charge importante, du fait de leur grande inertie, l'énergie à dissiper pour ralentir voire pour obtenir l'arrêt du véhicule avec un système de freinage classique est tellement importante que les éléments du système de freinage, et notamment les plaquettes, subissent un échauffement entrainant une usure prématurée.

Il a donc été mis au point les ralentisseurs magnétiques permettant d'obtenir un freinage d'endurance, c'est-à-dire de ralentir le véhicule en dissipant une part importante de l'énergie de freinage, soulageant ainsi le système de freinage classique.

Un ralentisseur électromagnétique permet de dissiper l'énergie par la génération de courants de Foucault. A cet effet, le ralentisseur comprend en général un stator, fixé par exemple au bâti du véhicule, et un rotor, monté par exemple sur un arbre de transmission qui l'entraine en rotation. Le stator et le rotor sont montés coaxiaux, en vis-à-vis l'un de l'autre, un espace appelé entrefer étant mis en place entre eux, l'un ayant un rôle d'inducteur d'un champ magnétique, l'autre ayant un rôle d'induit.

En général, le stator joue le rôle de l'inducteur et comprend typiquement un électroaimant qui, lorsqu'il est parcouru par un courant électrique, génère un champ magnétique. Le rotor comprend un élément conducteur, appelé induit, qui, lorsqu'il est soumis au champ magnétique généré par le stator et entrainé en rotation par l'arbre de transmission, est parcouru par des courants de Foucault. Des forces, appelées forces de Laplace, apparaissent alors et s'opposent à la rotation du rotor. Le couple de freinage ainsi produit et appliqué sur l'arbre de transmission permet de ralentir le véhicule.

Le stator peut être associé à un ou à plusieurs rotors, par exemple placés de part et d'autre du stator selon leur direction axiale.

Un problème majeur des ralentisseurs électromagnétiques est que les courants de Foucault produisent un échauffement important de l'induit du rotor qui dégrade ses propriétés physiques et diminue l'efficacité du ralentisseur. En particulier, la valeur du couple de freinage du ralentisseur diminue lorsque la température de l'induit augmente.

Il a donc été développé des moyens pour évacuer cette chaleur, et notamment par conduction et par ventilation.

A cet effet, le rotor comprend communément une joue solidaire de l'induit au moyen d'une pluralité d'ailettes radiales. Certaines ailettes sont prolongées pour former des bras, lesquels réalisent la liaison avec une couronne de fixation, destinée à être solidarisée en rotation à l'essieu, directement ou par l'intermédiaire d'une pièce de liaison. Ainsi, la chaleur de l'induit est évacuée vers la joue via les ailettes, où elle est dissipée, les ailettes engendrant également un effet de ventilation.

Le document FR 2 584 878 (LABAVIA) présente un exemple de rotor pour ralentisseur électromagnétique, dans lequel les ailettes formant entretoise entre le disque induit et la joue sont décomposées en au moins deux tronçons, écartés angulairement l'un de l'autre, et se chevauchant radialement partiellement, à la manière de tuiles. Certaines ailettes sont prolongées pour former des bras et effectuer la liaison avec l'arbre de transmission.

Le document EP 0 235 306 (LABAVIA) présente une variante d'un rotor pour ralentisseur électromagnétique dans lequel il est proposé d'améliorer l'évacuation de la chaleur par la mise en place de stries ou d'ondulations sur l'une des faces des ailettes, afin de créer un écoulement d'air entre les ailettes favorable au refroidissement par ventilation.

Le document FR 2 864 719 (TELMA) décrit un autre exemple de rotor pour ralentisseur électromagnétique. Dans ce document, il est proposé de modifier la forme des ailettes entre l'induit et la joue du rotor du document FR 2 584 878 en rendant les tronçons les plus proches du centre du disque de l'induit sensiblement plans et radiaux.

Bien que les solutions proposées dans l'état de la technique permettent de produire un effet de refroidissement, celui-ci demeure insuffisant, et l'induit peut atteindre des températures de l'ordre de 700°C à 800°C.

Par ailleurs, les bras, reliés à la couronne de fixation, à l'induit et à la joue, sont fortement sollicités, en particulier au niveau de leur jonction avec l'induit à cause notamment :

- des forces d'attraction magnétique entre l'induit et le stator, tendant à déplacer axialement le rotor par rapport au stator ;
- du couple de freinage appliqué sur l'arbre de transmission, et de la résistance de ce dernier ;
- de l'inertie du rotor.

La température élevée de l'induit affaiblit la jonction du bras sur l'induit, laquelle peut atteindre des températures de l'ordre de 600°C. Sa tenue mécanique aux sollicitations s'en trouve dégradée, et une déformation plastique ou des fissures peuvent apparaitre, altérant le fonctionnement du ralentisseur. Eventuellement, les déformations peuvent être telles qu'on aboutit à un contact entre le rotor et le stator, voire à une rupture de la jonction, de sorte que le véhicule se trouve immobilisé jusqu'à ce que le ralentisseur soit remplacé.

Il existe des ralentisseurs, appelés « Hydral », utilisant un circuit d'eau de refroidissement du moteur pour refroidir le ralentisseur. Toutefois, leur conception plus complexe les rend plus coûteux et plus difficiles à monter sur le véhicule.

Par conséquent, il existe un besoin pour un nouveau rotor de ralentisseur électromagnétique remédiant aux inconvénients précités.

Un premier objet de la présente invention est donc de proposer un rotor pour ralentisseur électromagnétique dont la résistance mécanique aux sollicitations est accrue.

Un deuxième objet de la présente invention est de proposer un rotor pour ralentisseur électromagnétique dont la durée de vie est augmentée.

Un troisième objet de la présente invention est de proposer un rotor pour ralentisseur électromagnétique limitant les besoins de remplacement.

Un quatrième objet de la présente invention est de proposer un rotor pour ralentisseur électromagnétique à moindre coût.

Un cinquième objet de la présente invention est de proposer un rotor pour ralentisseur électromagnétique d'encombrement limité.

A cet effet, l'invention propose, selon un premier aspect, un rotor de ralentisseur électromagnétique pour véhicule, le rotor comprenant :

- au moins un induit se présentant sous la forme d'un disque annulaire, apte à être parcouru par des courants de Foucault sous l'effet d'un champ électromagnétique généré par un stator, l'induit présentant une face intérieure,
- au moins une joue se présentant sous la forme d'un disque annulaire coaxial à l'induit et présentant une face intérieure en vis-à-vis et à distance de la face intérieure de l'induit, la joue étant solidaire de l'induit,
- au moins une couronne de fixation coaxiale à l'induit, apte à être solidarisée en rotation à un arbre de transmission du véhicule,
- au moins un bras, défini entre un bord supérieur et un bord inférieur et présentant une première portion extrême solidaire de la face intérieure de la joue par le bord inférieur, la première portion extrême s'étendant entre la face intérieure de la joue et la face intérieure de l'induit, et présentant une deuxième portion extrême solidaire de la couronne de fixation,

le bord supérieur du bras est à distance de la face intérieure de l'induit sur l'ensemble de la dimension radiale du bras, de manière à former un espace entre le bras et l'indui,

en ce que le bras présente, lorsque vu dans un plan perpendiculaire à l'axe de rotation du rotor, un point d'inflexion de manière à former un S. Le rotor étant caractérisé en ce que la deuxième portion extrême du bras est une portion courbe dans un plan perpendiculaire à l'axe de rotation du rotor, en ce que le bras comprend une portion intermédiaire entre la première portion extrême et la deuxième portion extrême, la portion intermédiaire étant une portion courbe dans un plan perpendiculaire à l'axe de rotation du rotor, avec un rayon de courbure inversé par rapport au rayon de courbure de la deuxième portion extrême,

et en ce que les rayons de courbure de la deuxième portion extrême et de la portion intermédiaire du bras sont choisis de manière à satisfaire la relation suivante :

$$10\% \leq \left| 1 - \frac{R2}{R1} \right| \leq 20\% \,.$$

L'espace ainsi formé entre le bras et l'induit permet de diminuer considérablement le transfert de chaleur entre les bras et l'induit, renforçant la résistance du rotor aux températures élevées.

De préférence, les rayons de courbure de la deuxième portion extrême et de la portion intermédiaire du bras sont choisis de sorte que :

$$\left| 1 - \frac{R2}{R1} \right| = 15\%$$

Selon un mode de réalisation préféré, la dimension de l'espace entre le bras et la face intérieure de l'induit, selon une direction axiale, est supérieure ou égale à 8 mm.

De préférence, le rotor comprend une pluralité d'ailettes entre la face intérieure de la joue et la face intérieure de l'induit, solidarisant la joue et l'induit. Les ailettes permettent de créer des couloirs de circulation des courants d'air, et de créer un effet de ventilation, favorisant la dissipation de la chaleur.

Le bras s'étend par exemple selon un angle de 45° dans un plan perpendiculaire à l'axe de rotation du rotor.

Selon un mode préféré de réalisation, la première portion extrême du bras s'étend radialement dans un plan perpendiculaire à l'axe de rotation du rotor.

De préférence, le rotor comprend une pluralité de bras.

Selon un deuxième aspect, l'invention propose un ralentisseur électromagnétique, notamment pour véhicule, comprenant au moins un stator apte à induire un champ électromagnétique lorsqu'il est parcouru par un courant électrique, et au moins un rotor tel que décrit ci-dessus, la face extérieure de l'induit, opposée à la face intérieure de l'induit, étant en vis-à-vis du stator et à distance du stator.

La durée de vie du ralentisseur est ainsi augmentée grâce au nouveau rotor, plus résistant vis-à-vis des températures élevée.

Selon un troisième aspect, l'invention propose un véhicule comprenant un arbre de transmission entre un moteur et un organe de déplacement, tel qu'une roue, et comprenant au moins un ralentisseur électromagnétique tel que celui mentionné ci-dessus. Le stator est alors solidaire du châssis du véhicule, et la couronne de fixation est montée sur un arbre de transmission de sorte que rotor est entrainé en rotation par l'arbre de transmission.

Le véhicule, même lourd, peut ainsi ralentir ou freiner plus rapidement grâce au ralentisseur moins sensible aux températures élevées.

D'autres objets et avantages apparaitront à la lumière de la description faite ci-après en référence aux dessins annexés, dans lesquels :

- la figure 1 est une vue en perspective d'un rotor selon l'état de la technique ;
- la figure 2 est une vue de face du rotor de la figure 1 ;
- la figure 3 est une vue similaire à celle de la figure 2, dans laquelle la joue du rotor a été retirée,
- la figure 4 est une vue de côté du rotor de la figure 1 ;
- la figure 5 est une vue en perspective d'un nouveau rotor selon l'invention ;
- la figure 6 est une vue de face du rotor de la figure 5,
- la figure 7 est une vue similaire à celle de la figure 6, dans laquelle la joue du rotor a été retirée,
- la figure 8 est une vue de côté du rotor de la figure 5 ;
- la figure 9 est une vue de détail de la figure 8 ;
- la figure 10 est une vue de détail du rotor de la figure 6.

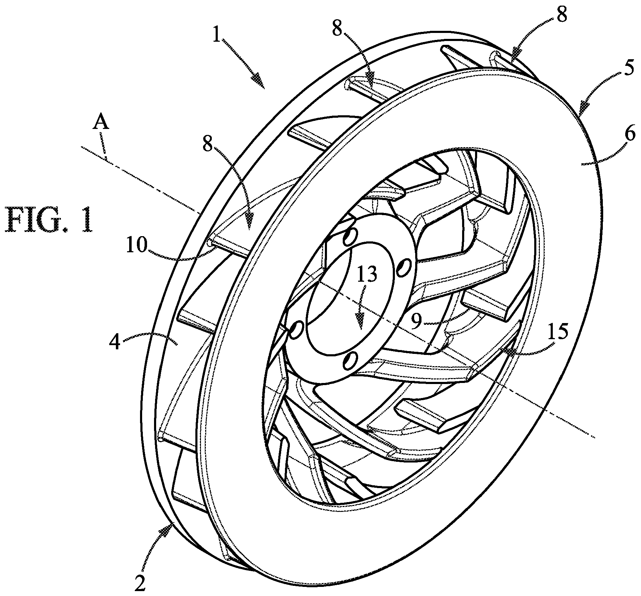

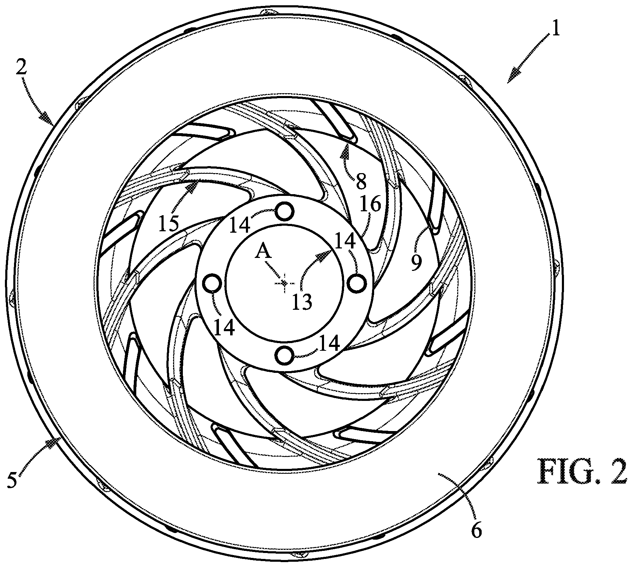

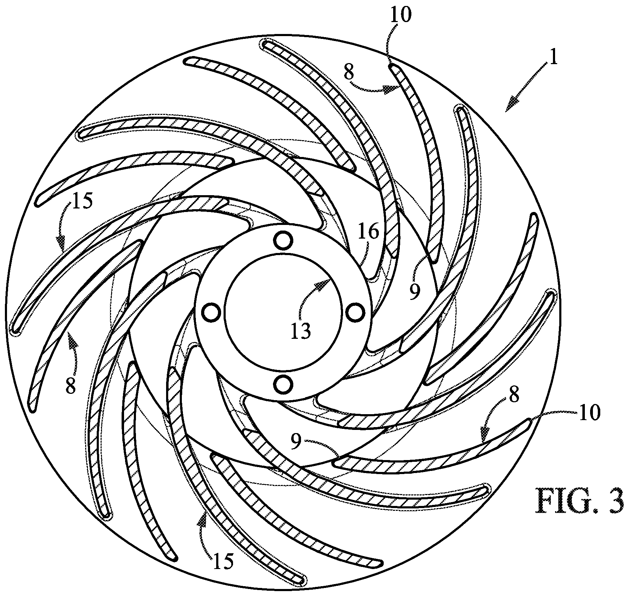

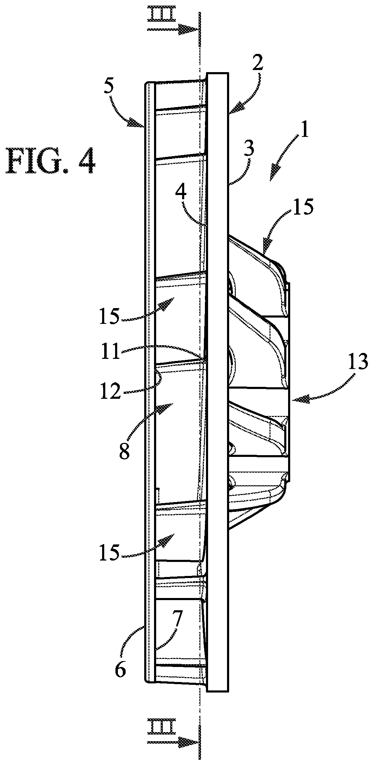

Sur les figures 1 à 4, il est représenté un rotor 1 de ralentisseur électromagnétique selon l'état de la technique, pour un véhicule à moteur. Le rotor se présente de préférence sous la forme d'une pièce monobloc, en matériau ferromagnétique, obtenue par moulage. Le ralentisseur comprend en outre un stator, non illustré, comme décrit en introduction, un entrefer étant formé entre le stator et le rotor. Le rotor 1 sera par exemple rendu solidaire en rotation à un arbre de transmission entre le moteur et des organes de déplacement, tels que des roues, tandis que le stator sera rendu solidaire au châssis du véhicule.

Le rotor 1 comprend un induit 2 sous la forme d'un disque annulaire, et présente une face 3 extérieure et une face 4 intérieure, sensiblement planes, mais pas nécessairement parallèles. Le rotor 1 comprend en outre une joue 5 sous la forme d'un disque également annulaire présentant une face 6 extérieure et une face 7 intérieure sensiblement planes. L'induit 2 et la joue 5 sont placés coaxialement sur un axe A, qui est l'axe de rotation du rotor 1, de sorte que leurs faces 4, 7 intérieures sont en vis-à-vis et à distance l'une de l'autre. Par exemple, le diamètre intérieur de la joue 5 est de préférence supérieur ou égal au diamètre intérieur de l'induit 2, tandis que le diamètre extérieur de la joue 5 est de préférence inférieur ou égal au diamètre extérieur de l'induit 2. L'épaisseur de l'induit 2 est de préférence supérieure à l'épaisseur de la joue 5.

Dans ce qui suit, le terme « axial » fait référence à la direction parallèle à l'axe A des disques, c'est-à-dire l'axe de rotation, et le terme « radial » fait référence à la direction parallèle aux rayons des disques de l'induit 2 et de la joue 5.

L'induit 2 et la joue 5 sont solidaires, de sorte qu'une partie de la chaleur générée dans l'induit 2 par les courants de Foucault est évacuée par conduction vers la joue 5, laquelle dissipe la chaleur à l'air.

De préférences, des ailettes 8 sont réparties régulièrement en couronne radiale entre l'induit 2 et la joue 5, et s'étendent d'une face intérieure à l'autre, solidarisant l'induit 2 et la joue 5 tout en formant entretoises. Une ailette 8 se présente par exemple sous la forme d'une plaque incurvée, définie d'une part entre un bord 9 intérieur et un bord 10 extérieur droits, et d'autre part entre un bord 11 supérieur solidaire de la face 4 intérieure de l'induit 2 et un bord 12 inférieur solidaire de la face 7 intérieure de la joue 5, le bord 11 inférieur et le bord 12 supérieur étant incurvés. Avantageusement, le bord 10 extérieur, c'est-à-dire celui le plus éloigné de l'axe A de rotation, ne s'étend pas au-delà de la périphérie de l'induit 2 ou de la joue 5, de manière à limiter l'encombrement.

Ainsi, lorsque le rotor 1 est entrainé en rotation autour de l'axe A de rotation, les ailettes 8 favorisent la circulation de l'air dans les couloirs définis entre les ailettes 8 pour refroidir le rotor 1, et plus particulièrement l'induit 2, le sens de courbure des ailettes 8 correspondant par exemple au sens de rotation du rotor 1 autour de l'axe A de rotation.

Le rotor 1 comprend avantageusement une couronne 13 de fixation, sous la forme d'un cylindre creux coaxial à l'induit 2 et à la joue 5, pour solidariser en rotation le rotor 1 à un arbre de transmission du véhicule. La couronne 13 peut être montée directement sur l'arbre ou grâce à une pièce intermédiaire. A cet effet, la couronne 13 est avantageusement munie de perçages 14 s'étendant axialement, afin de permettre l'insertion de moyens de fixation de type visserie entre la couronne 13 et l'arbre de transmission ou la pièce intermédiaire.

Le rotor 1 comporte par ailleurs des bras 15, formés avantageusement dans le prolongement de certaines ailettes 8, en suivant la courbure de ailettes 8, et s'étendant jusqu'à la couronne 13, à laquelle ils sont fixés par exemple sur sa surface 16 cylindrique. De préférence, les bras 15 sont répartis sur les faces 4, 7 intérieures de l'induit 2 et de la joue 5 de manière régulière, par exemple, pour huit bras 15, tous les 45°.

Les bras 15 rejoignent la couronne 13 sur sa surface 16 cylindrique axiale. Le lieu où les bras 15 rejoignent la couronne 13 peut être décalé axialement du lieu où les bras 15 sont fixés à l'induit 2 et à la joue 5, les bras 15 présentant alors une forme en S dans un plan parallèle à l'axe A de rotation.

Ainsi, les bras 15 dans le prolongement d'ailettes 8 sont-ils solidaires à la fois de la joue 5 et de l'induit 2.

Comme indiqué en introduction, le rotor 1 de l'état de la technique présente une faiblesse au niveau de la jonction entre le bras 15 et l'induit 2 du fait en particulier de la température élevée de l'induit 2.

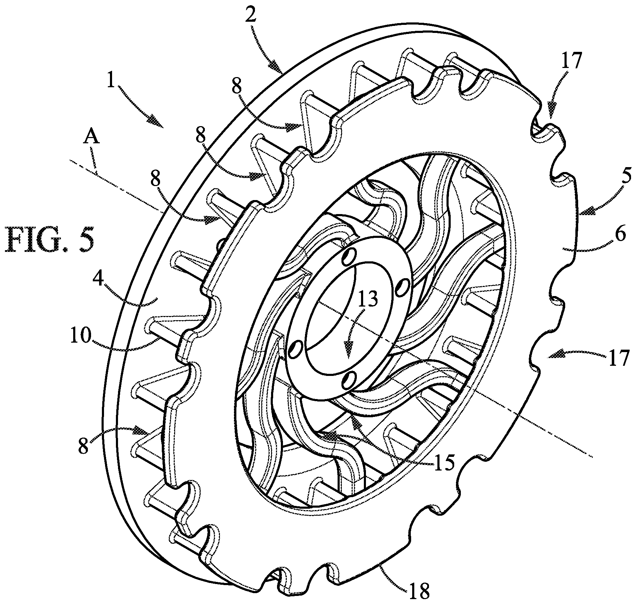

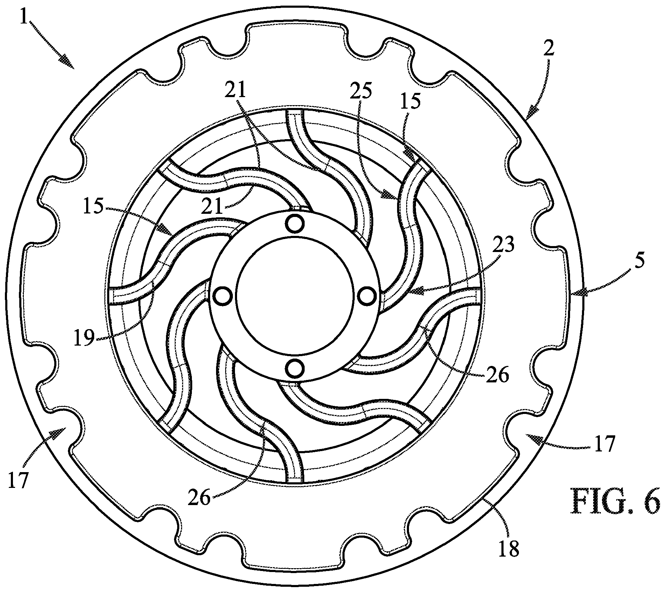

Un nouveau rotor 1 selon la présente invention est illustré sur les figures 5 à 10, dans lequel la jonction entre les bras et l'induit a été supprimée.

Les mêmes références que celles utilisées pour le rotor des figures 1 à 4 sont utilisées pour désigner les mêmes éléments du nouveau rotor 1.

Plus précisément, de même que précédemment, le nouveau rotor 1 comprend un induit 2 et une joue 5 solidaires entre eux, tous deux sous le forme de disques annulaires, présentant une face 4, 7 intérieure sensiblement plane, la face 7 intérieure de la joue 5 étant en vis-à-vis de la face 4 intérieure de l'induit 2. Des ailettes 8 sont réparties régulièrement entre l'induit 2 et la joue 5. Elles s'étendent de la face 4 intérieure de l'induit 2 et rejoignent la face 7 intérieure de la joue 5. Le rotor 1 comprend également une couronne 13 de fixation. Ces éléments peuvent être sensiblement identiques à ceux déjà décrits pour le rotor de l'art antérieur en référence aux figures 1 à 4.

Selon le mode de réalisation préféré, qui est celui des figures 5 à 10, la joue 5 est munie d'encoches 17 sur sa périphérie 18 extérieure, régulièrement réparties par paire. Ces encoches 17 permettent de diminuer la masse du rotor 1, et donc les coûts de fabrication, tout en conservant les propriétés mécaniques.

Le rotor 1 selon l'invention comprend également au moins un bras 15, en pratique une pluralité de bras 15, chacun étant localisé entre deux ailettes 8, pour solidariser la couronne 13 à l'induit 2 et à la joue 5. Toutefois, au contraire des rotors de l'état de la technique, chaque bras 15 n'est pas directement fixé sur l'induit 2.

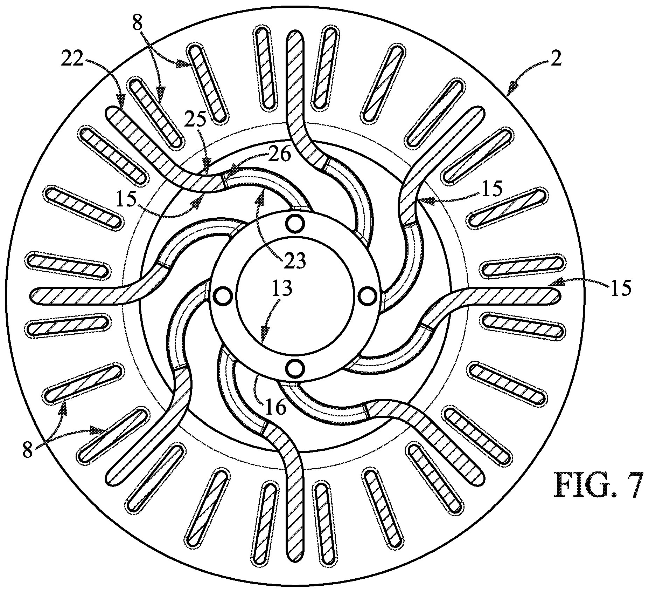

Plus précisément, selon l'invention, chaque bras 15 est défini entre un bord 19 supérieur, un bord 20 inférieur et deux bords 21 latéraux et présente une première portion 22 extrême solidaire de la face 7 intérieure de la joue 5 et une deuxième portion 23 extrême solidaire de la couronne 13 de fixation. La première portion 22 extrême du bras 15, illustrée notamment sur la figure 7, s'étend par conséquent entre la face 4 intérieure de l'induit 2 et la face 7 intérieure de la joue 5 en étant solidaire de la face 7 intérieure de la joue 5 par son bord 20 inférieur, mais le bord 19 supérieur demeure à distance de la face intérieure de l'induit selon la direction axiale.

Ainsi, chaque bras 15 est solidaire de la joue 5 par le bord 20 inférieur, tandis qu'un espace 24 est formé entre la face 4 intérieure de l'induit 2 et le bord 19 supérieur de chaque bras 15, et ce sur l'ensemble de la dimension radiale du bras 15. L'air étant mauvais conducteur thermique, la chaleur n'est pas ou peu transmise aux bras 15 par l'induit 2.

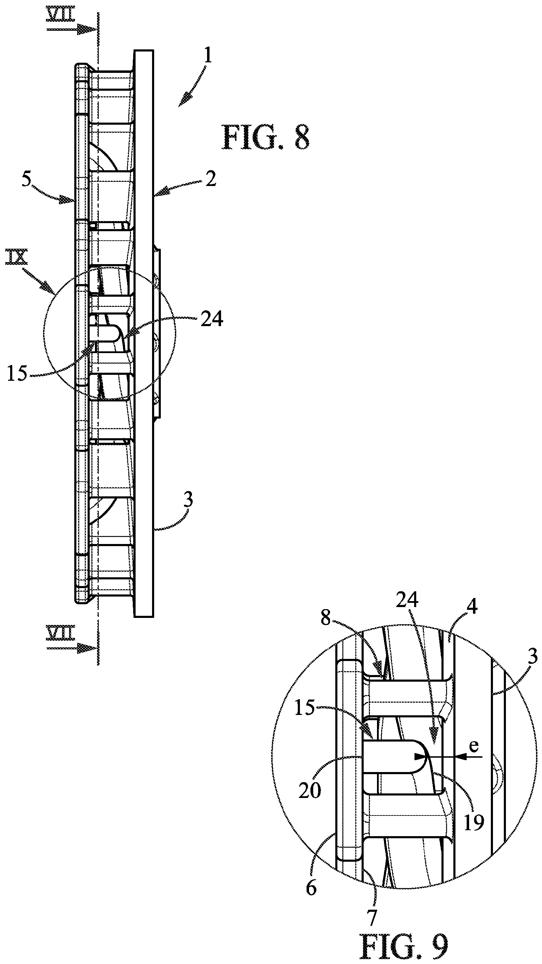

La dimension e de l'espace 24, visible notamment sur la figure 9, c'est-à-dire la distance entre le bord 19 supérieur de la première portion 22 du bras 15 et la face 4 intérieure de l'induit 2, mesurée selon la direction axiale, est choisie de manière à trouver un compromis entre la création d'une barrière thermique entre les bras 15 et l'induit 2, tout en limitant l'encombrement. La dimension e de l'espace 24 est avantageusement comprise entre 6 mm et 12 mm. Cette dimension peut ne pas être constante sur la longueur du bras 15. L'influence de la température de l'induit 2 sur les bras 15 est alors fortement réduite.

En effet, en dessous de 6 mm, la dimension e de l'espace 24 se révèle insuffisante pour permettre un écoulement d'air et réduire la température du bras de manière significative. Au-delà de 12 mm, l'influence de la barrière thermique sur la température des bras 15 n'est plus appréciable, de sorte que l'encombrement résultant n'est plus contrebalancé par un avantage sur la température des bras 15.

Ainsi, en maintenant la dimension e de l'espace 24 entre 6mm et 12 mm, la température des bras 15 mesurée sur leur première portion 22 extrême est inférieure jusqu'à 58% par rapport à la température de la même portion de bras lorsqu'elle est raccordée à l'induit comme dans les rotors de l'état de la technique. Ainsi, pour le nouveau rotor, la température des bras 15 est abaissée par rapport aux bras de l'état de la technique, de telle manière que le nouveau rotor peut être employé dans des applications sévères, c'est-à-dire engendrant des élévations de température du rotor 1 plus élevées, sur des durées de temps plus importantes, que pour des applications dites normales.

De préférence, la dimension e de l'espace 24 sur l'ensemble du bras 15 est au moins égale à 8 mm, afin de garantir une isolation thermique suffisante.

Ainsi, les bras 15 ne sont en contact qu'avec la joue 5, tout en assurant l'entrainement en rotation de l'induit 2. La température de la joue 5, qui est en général de l'ordre de 450°C, plus faible que celle de l'induit 2 permet de conserver une jonction avec le bras 15 plus résistante aux contraintes. En outre, le déplacement du rotor 1 en translation selon l'axe A de rotation est d'abord répercuté aux ailettes 8, puis à la joue 5 et enfin à la jonction des bras 15 sur la joue 5, de sorte que les déformations à la jonction des bras 15 et de la joue 5 sont diminuées : elles sont d'abord subies par les jonctions entre les ailettes 8 avec l'induit 2 et la joue 5.

De même, l'inertie du rotor 1 a une influence diminuée en termes de déformation sur la jonction entre les bras 15 et l'induit 2, les ailettes en absorbant une partie.

Même si la surface de contact entre l'induit 2 et la joue 5 est diminuée par rapport aux rotors de l'état de la technique en supprimant la jonction entre les bras 15 et l'induit 2, et par là rendant plus faible le phénomène de conduction entre l'induit 2 et la joue 5 pour refroidir l'induit, le nouveau rotor 1 selon l'invention présente une résistance accrue aux contraintes.

On va maintenant décrire un mode de réalisation préféré du bras 15, présentant une forme augmentant par ailleurs la résistance mécanique du rotor 1.

La première portion 22 est une portion droite, qui s'étend radialement entre les faces 4, 7 intérieures de la joue 2 et de l'induit 5.

La deuxième portion 23 est une portion courbe dans un plan perpendiculaire à la direction axiale, c'est-à-dire que les bords 21 latéraux du bras 15 sont courbés.

Une portion 25 intermédiaire relie la première portion 22 à la deuxième portion 23. La portion 25 intermédiaire est également une portion courbe dans un plan perpendiculaire à la direction axiale, mais dont le sens de la courbure est contraire à celui de la deuxième portion 23.

Ainsi, le bras 15, lorsque vu dans un plan perpendiculaire à la direction axiale, présente un point 26 d'inflexion, entre la deuxième portion 23 et la portion 25 intermédiaire, de manière à former un S.

La nouvelle forme des bras 15 permet ainsi une meilleure répartition des contraintes sur toute leur longueur, évitant une concentration des contraintes aux jonctions avec la couronne 13 et la joue 5. En outre, la forme en S du bras 15 favorise ses déformations élastiques radiales, limitant les risques de rupture. En combinant la nouvelle forme des bras 15 avec la caractéristique selon laquelle les bras 15 ne sont pas directement solidaires de l'induit 2, les déformations des bras 15 sont considérablement réduites.

Les dimensions du bras 15 sont choisies de manière à assurer un bon échange thermique avec le milieu extérieur par les bords 21 latéraux, tout en limitant le phénomène de conduction thermique par la section du bras 15.

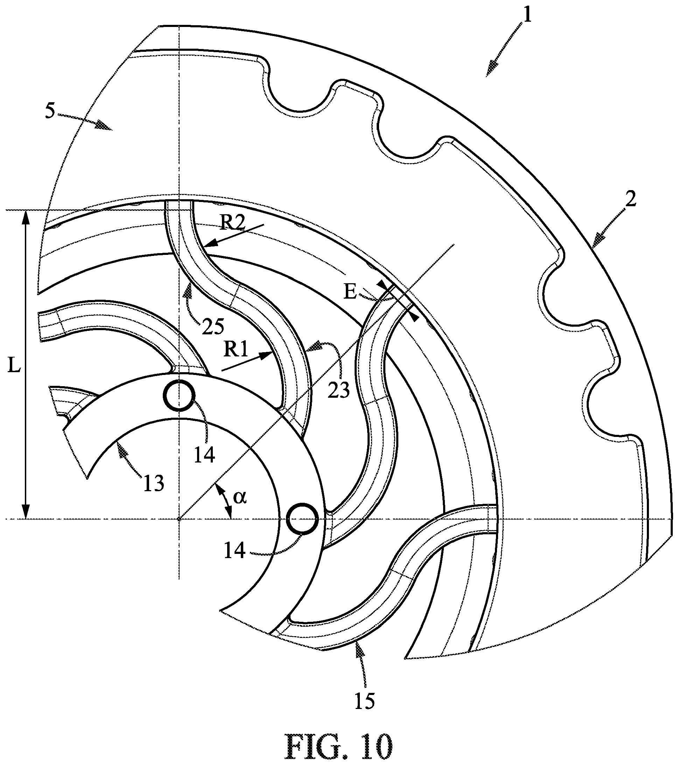

On a reporté dans le tableau 1 ci-dessous quelques exemples de valeurs numériques de dimensions du bras, en mm, en référence à la figure 10.

**Tableau 1**

| | |
|---|---|
| épaisseur E du bras | 15 |
| longueur L du bras | 163 |
| rayon R1 de courbure | 50 |
| rayon R2 de courbure | 57,5 |

L'épaisseur E du bras 15 correspond ainsi à sa dimension transversale, perpendiculaire à la direction radiale, mesurée sur la première portion 22 du bras 15. Dans l'exemple illustré, l'épaisseur E du bras 15 est constante, les bords 21 latéraux étant parallèles, mais elle pourra être variable.

La longueur L du bras 15 correspond ici à la dimension radiale de la deuxième portion 23 et de la portion 25 intermédiaire, mesurée depuis le centre des disques de l'induit 2 et de la joue 5.

Le rayon R1 de courbure est le rayon de courbure de la deuxième portion 23 du bras 15, et le rayon R2 de courbure est le rayon de courbure de la portion 25 intermédiaire du bras 15.

De manière générale, les rayons R1 et R2 de courbure des portions 23, 25 courbes du bras 15 sont choisis de manière à satisfaire la relation suivante :

$$10\% \leq \left| 1 - \frac{R2}{R1} \right| \leq 20\% \qquad (1)$$

Par exemple, les rayons R1 et R2 de courbure des bras 15 sont tels que :

$$\left| 1 - \frac{R2}{R1} \right| = 15$$

Lorsque les rayons R1 et R2 de courbure satisfont la relation (1), le bras 15 est alors particulièrement adapté pour résister à une application sévère du rotor. En effet, la Demanderesse a déterminé que lorsque la relation (1) est respectée, les risques de rupture des bras sont fortement diminués. Notamment, l'inversion du rayon de courbure entre la deuxième 23 extrême du bras 15 et la portion 25 intermédiaire permet de favoriser les déformations élastiques du bras 15. En outre, lorsque la relation (1) est satisfaite, le changement de courbure n'est pas trop brutal, assurant que les contraintes se répartissent sur les deux portions 23, 25 courbes du bras. Enfin, le changement de rayon de courbure dans la proportion de la relation (1) assure que les contraintes se répartissent sur les deux portions 23, 25 courbes du bras 15 de manière optimale.

Chaque bras 15 s'étend angulairement sur environ 45°, c'est-à-dire que l'angle α, mesuré dans un plan perpendiculaire à la direction axiale, entre le lieu de jonction du bras 15 sur la couronne 13 et la première portion 22 est d'environ 45°.

De préférence, la répartition angulaire des ailettes 8 est régulière, et celle des bras 15 l'est également. Toutefois, ailettes 8 et bras 15 ne sont pas coïncidants. Ainsi, un bras 15 ne se substitue pas à une ailette 8 dans la répartition des ailettes 8, et inversement.

Le nouveau rotor 1 ainsi formé présente une résistance accrue aux contraintes grâce au renforcement de la liaison entre la couronne 13 et l'ensemble comprenant l'induit 2 et la joue 5 et plus précisément en évitant tout contact entre les bras 15 avec l'induit 2.

Par exemple, dans l'exemple du rotor présentant les dimensions du tableau 1, grâce notamment à la dimension e minimale de 8 mm de l'espace 24 entre les bras 15 et l'induit 2, il a été noté que la température des bras 15 pouvant être inférieure à celle des bras des rotors de l'état de la technique ne comprenant pas un tel espace jusqu'à environ 100 °C.

En outre, la différence entre la température moyenne de l'induit et la température moyenne de la joue est plus importante dans le cas du nouveau rotor 1 que dans le cas des rotors de l'état de la technique, indiquant que le transfert thermique entre l'induit 2 et la joue 5 est moins important pour le nouveau rotor 1.

Le tableau 2 ci-dessous indique la température maximale mesurée sur l'induit, la température minimale mesurée sur un bras, la température moyenne de l'induit et la température moyenne de la joue pour un rotor de l'état de la technique comme présenté sur les figures 1 à 4 et pour le nouveau rotor. Les valeurs du tableau sont obtenues pour une simulation à 1000 rpm de vitesse de rotation du rotor, et une puissance appliquée sur l'induit de 44000 W.

**Tableau 2**

|  | Rotor de l'état de la technique | Nouveau rotor 1 |
|---|---|---|
| température maximale (en C°) | 750 | 785 |
| température minimale (en C°) | 160 | 65 |
| température moyenne de l'induit (en °C) | 678 | 666 |
| température moyenne de la joue | 267 | 194 |

La liaison des bras 15 sur la couronne 13 de fixation est ainsi plus résistante que dans les rotors de l'état de la technique : les risques de rupture des bras 15 au niveau de leur liaison avec la couronne 13 pour le rotor 1 décrit sont diminués, même dans des applications plus sévères dans lesquelles la température de l'induit est plus importante. La durée de vie du rotor 1 est augmentée.

Lorsque la dimension e de l'espace 24 est inférieure à 8 mm, le transfert de chaleur entre l'induit 2 et les bras 15 qui s'opère ne permet pas une amélioration significative par rapport à un induit fixé rigidement et directement sur les bras.

La forme et les dimensions des bras 15 du nouveau rotor 1 offrent par ailleurs une rigidité accrue.

Le nouveau rotor 1 selon l'invention va donc pouvoir être utilisé dans des applications sévères dans lesquelles la température de l'induit 2 est particulièrement élevée, tout en ayant une durée de vie plus importante dans les applications les plus courantes.

Comme les déformations se produisent en premier lieu sur les ailettes 8, elles ne sont pas critiques vis-à-vis de la pièce : leur déformation n'empêche pas l'utilisation du ralentisseur, de sorte qu'il n'est pas nécessaire de le remplacer dès que de telles déformations se produisent.

La fabrication du nouveau rotor 1 n'implique aucune augmentation des coûts par rapport aux rotors de l'état de la technique, car il n'y a pas de matière ou de pièces supplémentaires.

Enfin, le nouveau rotor 1 n'implique aucune augmentation de l'encombrement, les dimensions globales demeurant sensiblement identiques à celles des rotors de l'état de la technique.

La conception du nouveau rotor n'implique pas de modification du fonctionnement du ralentisseur. Ainsi, le nouveau rotor 1 pourra être associé à des stators déjà existants, voire il pourra être directement installé dans des véhicules déjà équipés d'un ralentisseur électromagnétique en remplacement des anciens rotors.

**Revendications**

1.  Rotor (**1**) de ralentisseur électromagnétique pour véhicule, le rotor comprenant :

    - au moins un induit (**2**) se présentant sous la forme d'un disque annulaire, apte à être parcouru par des courants de Foucault sous l'effet d'un champ électromagnétique généré par un stator, l'induit (**2**) présentant une face (**4**) intérieure,
    - au moins une joue (**5**) se présentant sous la forme d'un disque annulaire coaxial à l'induit (**2**) et présentant une face (**7**) intérieure en vis-à-vis et à distance de la face (**4**) intérieure de l'induit (**2**), la joue (**5**) étant solidaire de l'induit (**2**),
    - au moins une couronne (**13**) de fixation coaxiale à l'induit (**2**), apte à être solidarisée en rotation à un arbre de transmission du véhicule,
    - au moins un bras (**15**), défini entre un bord (**19**) supérieur et un bord (**20**) inférieur et présentant une première portion (**22**) extrême solidaire de la face (**7**) intérieure de la joue (**5**) par le bord inférieur (**20**), la première portion (**22**) extrême s'étendant entre la face (**7**) intérieure de la joue (**5**) et la face (**4**) intérieure de l'induit (**2**), et présentant une deuxième portion (**23**) extrême solidaire de la couronne (**13**) de fixation, le bord (**19**) supérieur du bras (**15**) est à distance de la face (**4**) intérieure de l'induit (**2**) sur l'ensemble de la dimension radiale du bras (**15**), de manière à former un espace (**24**) entre le bras (**15**) et l'induit (**2**),

    en ce que le bras (**15**) présente, lorsque vu dans un plan perpendiculaire à l'axe (**A**) de rotation du rotor (**1**), un point d'inflexion (**26**) de manière à former un S, le rotor (**1**) étant **caractérisé en ce que** la deuxième portion (**23**) extrême du bras (**15**) est une portion courbe dans un plan perpendiculaire à l'axe (**A**) de rotation du rotor (**1**), **en ce que** le bras (**15**) comprend une portion (**25**) intermédiaire entre la première portion (**22**) extrême et la deuxième portion (**23**) extrême, la portion (**25**) intermédiaire étant une portion courbe dans un plan perpendiculaire à l'axe (**A**) de rotation du rotor (**1**), avec un rayon (**R2**) de courbure inversé par rapport au rayon (**R1**) de courbure de la deuxième portion (**23**) extrême,
    et **en ce que** les rayons (**R1**, **R2**) de courbure de la deuxième portion (**23**) extrême et de la portion (**25**) intermédiaire du bras (**15**) sont choisis de manière à satisfaire la relation suivante :

$$10\% \leq \left|1 - \frac{R2}{R1}\right| \leq 20\% \,.$$

2.  Rotor (1) selon la revendication 1, **caractérisé en ce que** les rayons (**R1**, **R2**) de courbure de la deuxième portion (**23**) extrême et de la portion (**25**) intermédiaire du bras (**15**) sont choisis de sorte que :

$$\left|1 - \frac{R2}{R1}\right| = 15\%$$

3.  Rotor (**1**) selon la revendication 1 ou la revendication 2, **caractérisé en ce que** la dimension (**e**) de l'espace (**24**) entre le bras (**15**) et la face (**7**) intérieure de l'induit (**2**), selon une direction axiale, est comprise entre 6 mm et 12 mm.

4.  Rotor (**1**) selon la revendication 3, dans lequel la dimension (**e**) de l'espace (**24**) entre le bras (**15**) et la face (**7**) intérieure de l'induit (**2**) est supérieure ou égale à 8 mm.

5.  Rotor (**1**) selon l'une des revendications précédentes, **caractérisé en ce qu'**il comprend une pluralité d'ailettes (**8**) entre la face (**7**) intérieure de la joue (**5**) et la face (**4**) intérieure de l'induit (**2**), solidarisant la joue (**5**) et l'induit (**2**).

6. Rotor (**1**) selon l'une quelconques des revendications précédentes, **caractérisé en ce que** le bras (**15**) s'étend selon un angle de 45° dans un plan perpendiculaire à l'axe (**A**) de rotation du rotor (**1**).

7. Rotor (**1**) selon l'une quelconque des revendications précédentes, **caractérisé en ce que** la première portion (**22**) extrême du bras (**15**) s'étend radialement dans un plan perpendiculaire à l'axe (**A**) de rotation du rotor (**1**).

8. Rotor (**1**) selon l'une quelconque des revendications précédentes, comprenant une pluralité de bras (**15**).

9. Ralentisseur électromagnétique, notamment pour véhicule, comprenant au moins un stator apte à induire un champ électromagnétique lorsqu'il est parcouru par un courant électrique, le ralentisseur étant **caractérisé en ce qu'**il comprend au moins un rotor (**1**) selon l'une quelconque des revendications précédentes, la face (**3**) extérieure de l'induit (**2**), opposée à la face (**4**) intérieure de l'induit (**2**), étant en vis-à-vis du stator et à distance du stator.

10. Véhicule comprenant un arbre de transmission entre un moteur et un organe de déplacement, tel qu'une roue, **caractérisé en ce qu'**il comprend au moins un ralentisseur électromagnétique selon la revendication 9, le stator étant solidaire du châssis du véhicule, la couronne (**13**) de fixation étant montée sur un arbre de transmission de sorte que rotor (**1**) est entrainé en rotation par l'arbre de transmission.

**Patentansprüche**

1. Elektromagnetischer Retarderrotor (**1**) für ein Fahrzeug, wobei der Rotor umfasst:

   - mindestens einen Läufer (**2**), der in Form einer ringförmigen Scheibe vorliegt, der imstande ist, unter der Wirkung eines von einem Stator erzeugten elektromagnetischen Feldes von Foucaultschen Strömen durchflossen zu sein, wobei der Läufer (**2**) eine Innenseite (**4**) aufweist,
   - mindestens eine Wange (**5**), die in Form einer zum Läufer (**2**) koaxialen ringförmigen Scheibe vorliegt und eine Innenseite (**7**) gegenüber und beabstandet von der Innenseite (**4**) des Läufers (**2**) aufweist, wobei die Wange (**5**) mit dem Läufer (**2**) fest verbunden ist,
   - mindestens einen zum Läufer (**2**) koaxialen Befestigungskranz (**13**), der imstande ist, mit einer Übertragungswelle des Fahrzeugs drehfest verbunden zu sein,
   - mindestens einen Arm (**15**), der zwischen einem oberen Rand (**19**) und einem unteren Rand (**20**) definiert ist und einen ersten Endabschnitt (**22**) aufweist, der über den unteren Rand (**20**) mit der Innenseite (**7**) der Wange (**5**) fest verbunden ist, wobei sich der erste Endabschnitt (**22**) zwischen der Innenseite (**7**) der Wange (**5**) und der Innenseite (**4**) des Läufers (**2**) erstreckt, und einen zweiten Endabschnitt (**23**) aufweist, der mit dem Befestigungskranz (**13**) fest verbunden ist,

   wobei der obere Rand (**19**) des Arms (**15**) von der Innenseite (**4**) des Läufers (**2**) über die gesamte radiale Ausdehnung des Arms (**15**) derart beabstandet ist, dass ein Raum (**24**) zwischen dem Arm (**15**) und dem Läufer (**2**) gebildet wird, dadurch, dass der Arm (**15**), wenn in einer zur Rotationsachse (**A**) des Rotors (**1**) senkrechten Ebene gesehen, einen derartigen Krümmungspunkt (**26**) aufweist, dass ein S gebildet wird, wobei der Rotor (**1**) **dadurch gekennzeichnet ist, dass** der zweite Endabschnitt (**23**) des Arms (**15**) ein in einer zur Rotationsachse (**A**) des Rotors (**1**) senkrechten Ebene gebogener Abschnitt ist, dass der Arm (**15**) einen Übergangsabschnitt (**25**) zwischen dem ersten Endabschnitt (**22**) und dem zweiten Endabschnitt (**23**) umfasst, wobei der Übergangsabschnitt (**25**) ein in einer zur Rotationsachse (**A**) des Rotors (**1**) senkrechten Ebene gebogener Abschnitt mit einem in Bezug auf den Krümmungsradius (**R1**) des zweiten Endabschnitts (**23**) umgekehrten Krümmungsradius (**R2**) ist, und dass die Krümmungsradien (**R1**, **R2**) des zweiten Endabschnitts (**23**) und des Übergangsabschnitts (**25**) des Arms (**15**) derart ausgewählt sind, dass die folgende Beziehung erfüllt ist:

$$10\% \le \left|1 - \frac{R2}{R1}\right| \le 20\%.$$

2. Rotor (**1**) nach Anspruch 1, **dadurch gekennzeichnet, dass** die Krümmungsradien (**R1**, **R2**) des zweiten Endabschnitts (**23**) und des Übergangsabschnitts (**25**) des Arms (**15**) derart ausgewählt sind, dass:

$$\left|1 - \frac{R2}{R1}\right| = 15\%$$.

**3.** Rotor (**1**) nach Anspruch 1 oder Anspruch 2, **dadurch gekennzeichnet, dass** die Ausdehnung (**e**) des Raums (**24**) zwischen dem Arm (**15**) und der Innenseite (**7**) des Läufers (**2**) in einer axialen Richtung zwischen 6 mm und 12 mm beträgt.

**4.** Rotor (**1**) nach Anspruch 3, wobei die Ausdehnung (**e**) des Raums (**24**) zwischen dem Arm (**15**) und der Innenseite (**7**) des Läufers (**2**) größer oder gleich 8 mm ist.

**5.** Rotor (**1**) nach einem der vorangehenden Ansprüche, **dadurch gekennzeichnet, dass** er eine Vielzahl von Flügeln (**8**) zwischen der Innenseite (**7**) der Wange (**5**) und der Innenseite (**4**) des Läufers (**2**) umfasst, welche die Wange (**5**) und den Läufer (**2**) fest verbinden.

**6.** Rotor (**1**) nach einem der vorangehenden Ansprüche, **dadurch gekennzeichnet, dass** sich der Arm (**15**) in einem Winkel von 45° in einer zur Rotationsachse (**A**) des Rotors (**1**) senkrechten Ebene erstreckt.

**7.** Rotor (**1**) nach einem der vorangehenden Ansprüche, **dadurch gekennzeichnet, dass** sich der erste Endabschnitt (**22**) des Arms (**15**) radial in einer zur Rotationsachse (**A**) des Rotors (**1**) senkrechten Ebene erstreckt.

**8.** Rotor (**1**) nach einem der vorangehenden Ansprüche, umfassend eine Vielzahl von Armen (**15**).

**9.** Elektromagnetischere Retarder, insbesondere für ein Fahrzeug, umfassend mindestens einen Stator, der imstande ist, ein elektromagnetisches Feld zu induzieren, wenn er von einem elektrischen Strom durchflossen wird, wobei der Retarder **dadurch gekennzeichnet ist, dass** er mindestens einen Rotor (**1**) nach einem der vorangehenden Ansprüche umfasst, wobei die zur Innenseite (**4**) des Läufers (**2**) entgegengesetzte Außenseite (**3**) des Läufers (**2**) gegenüber dem Stator und vom Stator beabstandet ist.

**10.** Fahrzeug, umfassend eine Übertragungswelle zwischen einem Motor und einem Verlagerungsorgan wie ein Rad, **dadurch gekennzeichnet, dass** es mindestens einen elektromagnetischen Retarder nach Anspruch 9 umfasst, wobei der Stator mit dem Fahrgestell des Fahrzeugs fest verbunden ist, wobei der Befestigungskranz (**13**) auf einer Übertragungswelle derart angebracht ist, dass der Rotor (**1**) von der Übertragungswelle zur Rotation angetrieben wird.

**Claims**

**1.** Electromagnetic retarder rotor (**1**) for a vehicle, said rotor comprising:

- at least one armature (**2**) having the form of an annular disc, adapted to be traveled by eddy currents under the effect of an electromagnetic field generated by a stator, the armature (**2**) having an inner surface (**4**),
- at least one cheek (**5**) having the form of an annular disc coaxial to the armature (**2**) and presenting an inner surface (**7**) facing and at a distance from the inner surface (**4**) of the armature (**2**), the cheek (**5**) being secured to the armature (**2**),
- at least one ring (**13**) for coaxial attachment to the armature (**2**), adapted to be rotationally integral with a drive shaft of the vehicle,
- at least one arm (**15**), defined between an upper edge (**19**) and a lower edge (**20**) and having a first end portion (**22**) secured to the inner surface (**7**) of the cheek (**5**) by the lower edge (**20**), the first end portion (**22**) extending between the inner surface (**7**) of the cheek (**5**) and the inner surface (**4**) of the armature (**2**), and having a second end portion (**23**) secured to the attachment ring (**13**),

the upper edge (**19**) of the arm (**15**) is at a distance from the inner surface (**4**) of the armature (**2**) along the entire radial dimension of the arm (**15**), so as to form a space (**24**) between arm (**15**) and armature (**2**), the arm (**15**) having an inflection point (**26**) when viewed in a plane perpendicular to the axis (**A**) of rotation of the rotor (**1**), so as to form an S, the rotor (**1**) being **characterized in that** the second end portion (**23**) of the arm (**15**) is a curve portion in a plane perpendicular to the axis (**A**) of rotation of the rotor (**1**), and wherein the arm (**15**) comprises an intermediate portion (**25**) between the first end portion (**22**) and the second end portion (**23**), the intermediate portion (**25**) curving in a plane perpendicular to the axis (**A**) of rotation of the rotor (**1**), with a radius (**R2**) of curvature that is inverted relative to the radius (**R1**) of curvature of the second end portion (**23**) and wherein the radii (**R1**, **R2**) of curvature of the second end portion (**23**) and intermediate portion (**25**) of the arm (**15**) are selected so as to satisfy the following relation:

$$10\% \le \left|1 - \frac{R2}{R1}\right| \le 20\% .$$

2.  Rotor (**1**) according to claim 1, wherein the radii (**R1**, **R2**) of curvature of the second end portion (**23**) and intermediate portion (**25**) of the arm (**15**) are selected such that:

$$\left|1 - \frac{R2}{R1}\right| = 15\% .$$

3.  Rotor (**1**) according to claim 1 or claim 2, the dimension (**e**) of the space (**24**) between the arm (**15**) and the inner surface (**7**) of the armature (**2**), in an axial direction, is between 6 mm and 12 mm.

4.  Rotor (**1**) according to claim 3, wherein the dimension (**e**) of the space (**24**) between the arm (**15**) and the inner surface (**7**) of the armature (**2**) is greater than or equal to 8 mm.

5.  Rotor (**1**) according to any of the above claims, comprising a plurality of fins (**8**) between the inner surface (**7**) of the cheek (**5**) and the inner surface (**4**) of the armature (**2**), integrally securing together the cheek (**5**) and the armature (**2**).

6.  Rotor (**1**) according to any of the above claims, wherein the arm (**15**) extends at a 45° angle in a plane perpendicular to the axis (**A**) of rotation of the rotor (**1**).

7.  Rotor (**1**) according to any of the above claims, wherein the first end portion (**22**) of the arm (**15**) extends radially in a plane perpendicular to the axis (**A**) of rotation of the rotor (**1**).

8.  Rotor (**1**) according to any of the above claims, comprising a plurality of arms (**15**).

9.  Electromagnetic retarder, in particular for a vehicle, comprising at least one stator adapted to induce an electromagnetic field when it is traveled by an electric current, the retarder being **characterized in that** it comprises at least one rotor (**1**) according to any of the above claims, the outer surface (**3**) of the armature (**2**), opposite the inner surface (**4**) of the armature (**2**), facing the stator and at a distance from the stator.

10. Vehicle comprising a drive shaft between a motor and a means of movement such as a wheel, **characterized in that** it comprises at least one electromagnetic retarder according to claim 9, the stator being secured to the vehicle frame, the attachment ring (**13**) being mounted on a drive shaft such that the rotor (**1**) is driven rotationally by the drive shaft.

FIG. 1

FIG. 2

FIG. 3

FIG. 4

FIG. 5

EP 2 893 622 B1

FIG. 6

17

FIG. 7

FIG. 8

FIG. 9

FIG. 10

## RÉFÉRENCES CITÉES DANS LA DESCRIPTION

**Documents brevets cités dans la description**

- FR 2584878
- EP 0235306 A
- FR 2864719